# EUROPEAN PATENT APPLICATION

(11) **EP 4 343 943 A1**
(43) Date of publication of application: **27.03.2024**
(21) Application number: 22848668.4
(22) Date of filing: 29.07.2022
(51) Int. Cl.: H01M 50/289, H01M 50/503, H01M 50/204

(54) **BATTERY ASSEMBLY, BATTERY PACK AND VEHICLE**

(30) Priority: 30.07.2021 CN 202121778347 U
(71) Applicant: BYD Company Limited, Shenzhen, Guangdong 518118 (CN)
(72) Inventor: SHU, Yuanmao, Shenzhen, Guangdong 518118 (CN); WU, Yanfeng, Shenzhen, Guangdong 518118 (CN); ZHENG, Weixin, Shenzhen, Guangdong 518118 (CN); LU, Zhipei, Shenzhen, Guangdong 518118 (CN); SUN, Huajun, Shenzhen, Guangdong 518118 (CN)
(74) Representative: DehnsGermany Partnerschaft von Patentanwälten
(86) International application number: PCT/CN2022/108928
(87) International publication number: WO 2023/006064

(57) **Abstract**

A battery assembly (100), a battery pack (200) and a vehicle (300) are provided. The battery assembly includes: multiple cells (110); a connecting member (40), where the cells is electrically connected to each other through the connecting member; and a thermally conductive member (30), where the cell has a housing (10), the thermally conductive member is provided between the connecting member and the housing, and the thermally conductive member is thermally conductively connected to the connecting member and the housing.

## Description

### CROSS-REFERENCE TO RELATED APPLICATIONS

The present disclosure claims priority to Chinese Patent Application No. 202121778347.0 filed on July 30, 2021 and entitled "Battery assembly and battery pack", which is incorporated herein by reference in its entirety.

### FIELD

The present disclosure relates to a battery assembly, a battery pack, and a vehicle.

### BACKGROUND

In related art, commercially available battery assemblies include several cells that are arranged in sequence and electrically connected to each other through connecting members.

However, when the battery pack is fast charged, the connecting member may suffer from excessive temperature rise and heat accumulation. Consequently, the heat on the connecting member is transferred to an electrode core inside the cell through an electrode pole of the cell, causing a too high internal temperature in the cell. The too high internal temperature in the cell causes short-term over-temperature alarm by a battery controller and power limitation of the vehicle, affecting the driving experience. In the long run, this causes accelerated capacity attenuation of the cell, affecting the mile range, and affecting the safety of the battery pack and the safety of the vehicle in a serious case.

### SUMMARY

An object of the present disclosure is to provide a new technical solution to a battery assembly.

A further object of the present disclosure is to provide a new technical solution to a battery pack. The battery pack includes the battery assembly.

According to a first aspect of the present disclosure, a battery assembly is provided, which includes multiple cells; a connecting member, the cells being electrically connected to each other through the connecting member; and a thermally conductive member, the cell having a housing, the thermally conductive member being provided between the connecting member and the housing, and the thermally conductive member being thermally conductively connected to the connecting member and the housing.

According to an embodiment of the present disclosure, the thermally conductive member has a first and a second side opposite to each other. The first side of the thermally conductive member abuts against or is bonded to the housing, the connecting member is provided at the second side of the thermally conductive member, and the connecting member abuts against or is bonded to the second side of the thermally conductive member.

According to an embodiment of the present disclosure, one of the connecting member and the housing abuts against the thermally conductive member, and the other is bonded to the thermally conductive member.

According to an embodiment of the present disclosure, the cell has an electrode terminal. The battery assembly further includes a support, provided at the same end of the multiple cells. The connecting member is provided at a side of the support away from the cell. The support is provided with a first through hole corresponding to the electrode terminal, and the electrode terminal extends through the corresponding first through hole and is electrically connected to the connecting member. The support is further provided with a second through hole corresponding to the thermally conductive member, and the thermally conductive member extends through the corresponding second through hole and is thermally conductively connected to the housing and the connecting member respectively.

According to an embodiment of the present disclosure, the first through hole and the second through hole are arranged spaced apart on the support in a height direction of the support.

According to an embodiment of the present disclosure, the thermally conductive member and the electrode terminal are located at the same side of the cell. The connecting member includes a first connecting portion, provided at a position corresponding to the electrode terminal, and electrically connected to the electrode terminal; and a second connecting portion, provided below the first connecting portion and bonded to or abutting against the thermally conductive member.

According to an embodiment of the present disclosure, the cell has an explosion-proof valve, and the support is further provided with an avoidance hole corresponding to the explosion-proof valve. The avoidance hole, the first through hole and the second through hole are arranged in sequence in the height direction of the support.

According to an embodiment of the present disclosure, the connecting member is an integrally formed sheet.

According to an embodiment of the present disclosure, the housing is a metal housing.

According to a second aspect of the present disclosure, a battery pack is provided, which includes a liquid cooling plate; a battery assembly, which is any battery assembly as described above. The battery assembly is attached to one side of the liquid cooling plate.

According to a third aspect of the present disclosure, a vehicle is provided, which includes the battery pack.

According to the embodiments of the present disclosure, by setting the thermally conductive member between the housing of the cell and the connecting member, the heat on the connecting member can be transferred to the housing of the cell through the thermally conductive member, and then to the outside from the housing of cell. In this way, heat can be effectively dissipated from the connecting member, to prevent the heat accumulation on the connecting member, and ensure the safety and capacity of the cell during use.

Other features and advantages of the present disclosure will become apparent from the following detailed description of exemplary embodiments of the disclosure with reference to the drawings.

### BRIEF DESCRIPTION OF THE DRAWINGS

Accompanying drawings that are incorporated into and constitute a part of this specification show embodiments of the present disclosure, and are used together with this specification to describe the principle of the present disclosure.
FIG. 1 is a schematic structural view showing a portion of a battery pack according to an embodiment of the present disclosure;
FIG. 2 is a schematic structural view showing a portion of a battery pack according to an embodiment of the present disclosure;
FIG. 3 is an enlarged view of region A in FIG. 2; and
FIG. 4 is a schematic view of a vehicle according to an embodiment of the present disclosure.

### List of reference numerals

100 battery assembly;
110 cell; 1101 electrode terminal; 1102 explosion-proof valve;
10 housing; 11 cover plate; 12 housing body;
20 support; 21 first through hole; 22 second through hole; 23 avoidance hole;
30 thermally conductive member;
40 connecting member; 41 first connecting portion; 42 second connecting portion;
200 battery pack; 210 liquid cooling plate;
300 vehicle.

### DETAILED DESCRIPTION

Various exemplary embodiments of the present invention are now be described in detail with reference to the accompanying drawings. It is to be noted that unless otherwise specified, the relative arrangement, numerical expressions, and numerical values of components and steps described in the embodiments do not limit the scope of the disclosure.

The following descriptions of at least one exemplary embodiment are merely illustrative, and do not constitute any limitation on the present disclosure and application or use thereof in any way.

Technologies, methods, and devices known to those of ordinary skill in related art may not be discussed in detail, but where appropriate, the technologies, the methods, and the devices should be considered as a part of the specification.

In all examples shown and discussed herein, any specific value should be construed to be merely exemplary, and not as limitations. Therefore, other examples of exemplary embodiments may have different values.

It should be noted that similar reference numerals and letters indicate similar items in the following drawings. Therefore, once an item is defined in a drawing, it has no need to be discussed further in the following drawings.

A battery assembly 100 according to an embodiment of the present disclosure will be described in detail in conjunction with the drawings.

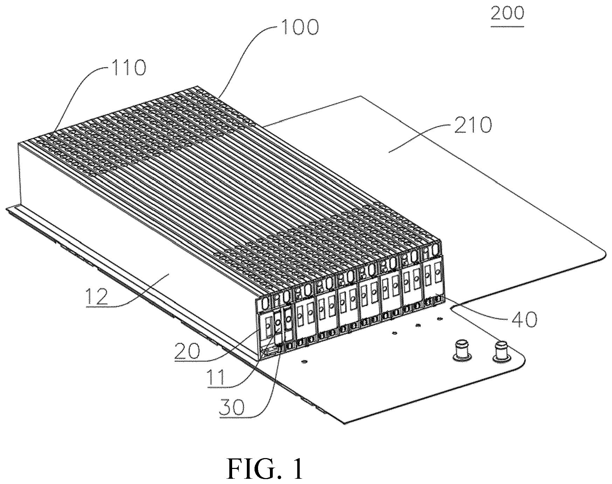

As shown in FIGs. 1 to 3, a battery assembly 100 according to an embodiment of the present disclosure includes multiple cells 110, a connecting member 40 and a thermally conductive member 30.

Specifically, the cells 110 are electrically connected to each other through the connecting member 40. The cell 110 has a housing 10, the thermally conductive member 30 is provided between the connecting member 40 and the housing 10 of the cell 110, and the thermally conductive member 30 is thermally conductively connected to the connecting member 40 and the housing 10 of the cell 110.

Notably, the thermally conductive connection can be understood as that one of the connecting member 40 and the housing 10 abuts against the thermally conductive member 30, and the other is bonded to the thermally conductive member 30. Alternatively, both the connecting member 40 and the housing 10 abut against or are bonded to the thermally conductive member 30. Alternatively, the thermally conductive member 30 is a thermally conductive adhesive, and the connecting member 40 is bonded to the housing 10 by the thermally conductive adhesive.

In other words, as shown in FIG. 1, the battery assembly 100 according to the embodiment of the present disclosure consists essentially of the cells 110, the thermally conductive member 30 and the connecting member 40. The thermally conductive member 30 is provided between the housing 10 of the cell 110 and the connecting member 40. Multiple cells 110 are provided, and the multiple cells 110 are arranged in sequence. Each cell 110 has the housing 10, and the housing 10 includes a housing body 12 with an opening and a cover plate 11 for closing the opening. The connecting member 40 and the thermally conductive member 30 are located at the side where the cover plate 11 of the cell 110 resides.

Namely, the thermally conductive member 30 is located between the connecting member 40 and the cell 110. The connecting member 40 can be electrically connected to the cell 110, and thermally conductively connected to the thermally conductive member 30. Upon heat generation on the connecting member 40, the heat on the connecting member 40 can be transferred to the housing 10 of the cell 110 through the thermally conductive member 30, and then to the outside from the housing 10 of cell 110. Subsequently, air can be used for heat dissipation or a cooling system (such as a liquid cooling plate 210) can be used for heat dissipation, which is not limited herein.

Notably, when heat is transferred to the cover plate 11 of the cell 110 and the housing body 12 of the cell 110 by the thermally conductive member 30, the cover plate 11 of the cell 110 and the housing body 12 of the cell 110 can be a metal member, such as metal aluminum. The thermal conductivity of metal aluminum is 237W/m-k, so metal aluminum has the advantage of high thermal conductivity. Because the cover plate 11 of the cell 110 and the housing body 12 of the cell 110 have large areas, the heat dissipation area is increased. Therefore, by the way in which the heat is transferred to the cover plate 11 of the cell 110 and the housing body 12 of the cell 110 by the thermally conductive member 30, not only heat dissipation of the connecting member 40 is promoted, to prevent the occurrence of problems such as circuit failure caused by heat accumulation on the connecting member 40, but also timely heat dissipation is achieved, to prevent the heat accumulation inside the cell 110.

Upon fast charge of the battery, the heat on the connecting member 40 in the embodiment of the present disclosure can be transferred to the housing 10 of the cell 110 through the thermally conductive member 30, and then to the outside from the housing 10 of cell 110. In this way, heat can be effectively dissipated from the connecting member 40, to prevent the heat accumulation on and excessive temperature rise of the connecting member 40, and ensure the user's experience and driving safety. The heat conduction path according to the embodiment of the present disclosure will be described in detail below in combination with specific situations:

### Way I

Heat conduction path: connecting member 40-thermally conductive member 30-housing 10 of cell 110.

Namely, the heat on the connecting member 40 can be transferred to the housing 10 of the cell 110 through the thermally conductive member 30, and then the heat is directly spread from the housing 10 of the cell 110 to the outside.

### Way II

A liquid cooling plate 210 is provided below the cell 110.

Heat transfer path: connecting member 40-thermally conductive member 30-housing 10 of cell 110-liquid cooling plate 210.

Namely, the heat on the connecting member 40 can be transferred to the housing 10 of the cell 110 through the thermally conductive member 30, and the heat on the housing 10 is finally transferred to the liquid cooling plate 210. Since the cell 110 and the liquid cooling plate 210 can have a large contact area therebetween, the heat dissipation efficiency is greatly improved.

Therefore, in the battery assembly 100 according to the embodiment of the present disclosure, the thermally conductive member 30 is provided between the housing 10 of the cell 110 and the connecting member 40, such that the heat on the connecting member 40 can be transferred to the housing 10 of the cell 110 through the thermally conductive member 30, and then to the outside from the housing 10 of cell 110. In this way, heat can be effectively dissipated from the connecting member 40, to prevent the heat accumulation on the connecting member 40, and ensure the safety and capacity of the cell 110 during use.

According to an embodiment of the present disclosure, the thermally conductive member 30 has a first and a second side opposite to each other. The first side of the thermally conductive member 30 is bonded to or abuts against the housing 10 of the cell 110, the connecting member 40 is provided at the second side of the thermally conductive member 30, and the connecting member 40 is bonded to or abuts against the second side of the thermally conductive member 30.

Particularly, the thermally conductive member 30 has a first and a second side. After installation, the first side of the thermally conductive member 30 is in contact with or bonded to the cover plate 11 of the cell 110, and the second side of the thermally conductive member 30 is in contact with or bonded to the connecting member 40. By arranging the connecting member 40 and the cell 110 at two opposite sides of the thermally conductive member 30, the connecting member 40 can be electrically connected to the cell 110 by welding, and also thermally conductively connected to the thermally conductive member 30. Upon heat generation on the connecting member 40, the heat on the connecting member 40 can be transferred to the thermally conductive member 30, and then to the housing 10 of the cell 110 by the thermally conductive member 30, so as to effectively prevent the heat accumulation on the connecting member 40.

In some specific embodiments of the present disclosure, one of the connecting member 40 and the housing 10 abuts against the thermally conductive member 30, and the other is bonded to the thermally conductive member 30.

Namely, the connecting member 40 is bonded to the thermally conductive member 30, and the housing 10 of the cell 110 abuts against the thermally conductive member 30; or the connecting member 40 abuts against the thermally conductive member 30, and the housing 10 of the cell 110 is bonded to the thermally conductive member 30. The arrangement is simple and convenient for disassembly and installation, and also ensures that the thermally conductive member 30 is closely connected to the cell 110 and the connecting member 40 respectively, further ensuring the heat conduction from the connecting member 40 by the thermally conductive member 30.

According to an embodiment of the present disclosure, the cell 110 has an electrode terminal 1101. The battery assembly further includes a support 20, provided at the same end of the multiple cells 110. The connecting member 40 is provided at a side of the support 20 away from the cell 110. The support 20 is provided with a first through hole 21 corresponding to the electrode terminal 1101, and the electrode terminal 1101 extends through the corresponding first through hole 21 and is electrically connected to the connecting member 40. The support 20 is further provided with a second through hole 22 corresponding to the thermally conductive member 30 and the thermally conductive member 30 extends through the corresponding second through hole 22 and is thermally conductively connected to the housing 10 and the connecting member 40 respectively.

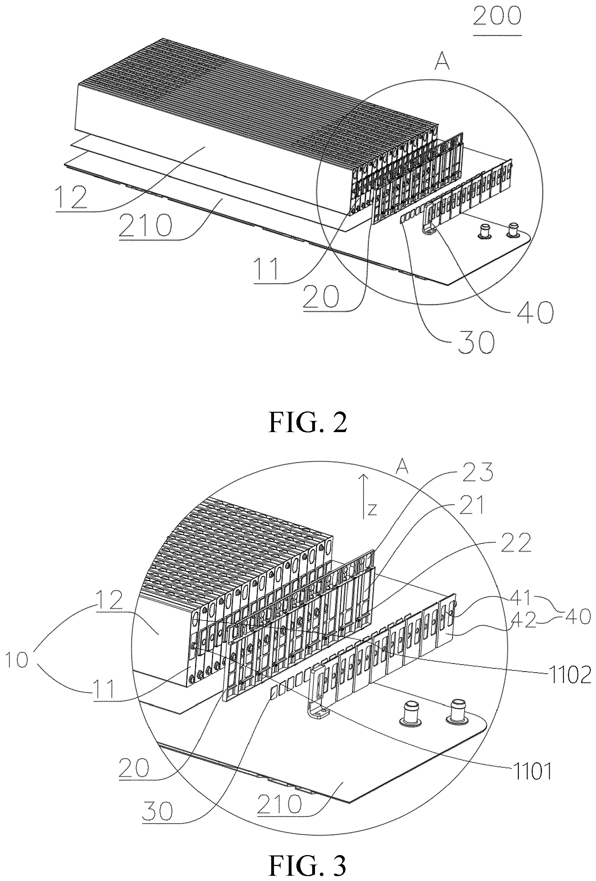

Particularly, as shown in FIG. 3, the electrode terminal 1101 is provided at the side where the cover plate 11 of the cell 110 resides. The connecting member 40 is electrically connected to the electrode terminal 1101, and the connecting member 40 can be connected to the electrode terminal 1101 by welding. The thermally conductive member 30 can be located at the side of cell 110 where the electrode terminal 1101 the resides, to reduce the length of the heat conduction path, and improve the heat conduction efficiency.

Further, as shown in FIG. 1, the support 20 is provided on the cell 110, so that the support 20 can locate the mounting positions of the connecting member 40 and the thermally conductive member 30. For example, the support 20 can be provided on the cover plate 11 of the cell 110. As shown in FIG. 3, the support 20 can be provided with the first through hole 21, and the first through hole 21 is provided at a position corresponding to the electrode terminal 1101. The electrode terminal 1101 extends through the corresponding first through hole 21 and is connected to the connecting member 40, which not only facilitates the positioning of the connecting member 40, but also facilitates the electrical connection between the connecting member 40 and the cell 110. Therefore, by providing the first through hole 21 on the support 20, the connecting member 40 is facilitated to be mounted at a position corresponding to the first through hole 21, thus rapidly locating the mounting position of the connecting member 40, and improving the assembly speed of the battery assembly 100.

As shown in FIG. 3, the support 20 is further provided with the second through hole 22, and the second through hole 22 is provided at a position corresponding to the mounting position of the thermally conductive member 30. Notably, after the thermally conductive member 30 is mounted in the second through hole 22 and the connecting member 40 is mounted in the first through hole 21, the connecting member 40 can be located above or below the thermally conductive member 30, which is not limited herein.

Namely, by proving the second through hole 22 on the support 20, the thermally conductive member 30 can be mounted at a position corresponding to the second through hole 22, such that not only the mounting position of the thermally conductive member 30 is located, and also the mounting range and deviation of dimension for placing the connecting member 40 can be further determined, thus further improving the assembly speed of the battery assembly 100.

In some specific embodiments of the present disclosure, the second through hole 22 and the first through hole 21 communicate or are spaced apart from each other, which is not limited herein. When the second through hole 22 and the first through hole 21 are arranged to have a communicating structure, the processing and manufacturing of the support 20 is facilitated. When the second through hole 22 and the first through hole 21 are arranged to have structures that are spaced apart, the positioning accuracy of the connecting member 40 and the thermally conductive member 30 is improved.

In some specific embodiments of the present disclosure, the connecting member 40 is clamped to the support 20. Namely, the connecting member 40 is connected to the support 20 by clamping, and the support 20 serves to support and locate the connecting member 40. When mounted, the connecting member 40 can be clamped to the support 20 at a position corresponding to the first through hole 21, so the mounting is convenient.

According to an embodiment of the present disclosure, the support 20 is a plastic member, and the thermally conductive member 30 is a thermally conductive silicone sheet.

Particularly, the support 20 is a plastic member having the advantage of light weight, which can not only reduce the weight of the whole battery assembly 100, but also support and locate the connecting member 40.

The thermally conductive member 30 has a sheet-like structure, which is beneficial to the increase of the contact areas between the thermally conductive member 30 and the housing 10 of the cell 110 and between the thermally conductive member 30 and the connecting member 40, thereby improving the heat conduction efficiency and performance.

For example, the thermally conductive member 30 is a thermally conductive silicone sheet. The thermal conductivity of the thermally conductive silicone sheet is 2-5W/m·k, the thermal conductivity of air is 0.03W/m·k, so the thermal conductivity of the thermally conductive silicone sheet is far greater than the thermal conductivity of air. That is to say, the heat on the connecting member 40 can be quickly transferred to the thermally conductive silicone sheet, and then the thermally conductive silicone sheet transfers the heat to the housing 10 of the cell 110. By providing the thermally conductive silicone sheet between the connecting member 40 and the housing 10 of the cell 110, the heat is ensured to be quickly transferred to the housing 10 of the cell 110, and then to the outside from the housing 10 of cell 110. In this way, heat can be effectively dissipated from the connecting member 40, to prevent the heat accumulation on the connecting member 40, and ensure the safety and capacity of the cell 110 during use.

In some specific embodiments of the present disclosure, the first through hole 21 and the second through hole 22 are arranged spaced apart on the support 20 in a height direction of the support 20.

Namely, by arranging the second through hole 22 and the first through hole 21 to have structures that are spaced apart, the positioning accuracy of the connecting member 40 and the thermally conductive member 30 is improved, the mounting of the connecting member 40 and the thermally conductive member 30 is facilitated, and the overall installation speed of the battery assembly is improved. As shown in FIG. 3, the height direction of the support 20 is a direction indicated by z in the figure.

According to an embodiment of the present disclosure, the thermally conductive member 30 and the electrode terminal 1101 are located at the same side of the cell 110. The connecting member 40 includes a first connecting portion 41 and a second connecting portion 42. The first connecting portion 41 is provided at a position corresponding to the electrode terminal 1101, and electrically connected to the electrode terminal 1101. The second connecting portion 42 is provided below the first connecting portion 41 and abuts against or is bonded to the thermally conductive member 30.

Namely, the connecting member 40 consists essentially of the first connecting portion 41 and the second connecting portion 42, and the first connecting portion 41 and the second connecting portion 42 are connected. Particularly, the first connecting portion 41 is provided at a position corresponding to the electrode terminal 1101, and electrically connected to the electrode terminal 1101. The second connecting portion 42 is provided at the side of the thermally conductive member 30 away from the cell 110, and one side of the second connecting portion 42 abuts against or is bonded to the thermally conductive member 30. By providing the first connecting portion 41 and the second connecting portion 42, where the first connecting portion 41 is electrically connected to the electrode terminal 1101 and one side of the second connecting portion 42 abuts against or is bonded to the thermally conductive member 30, the electrical connection of the connecting member 40 is achieved, and the heat on the connecting member 40 can be timely conducted away.

According to an embodiment of the present disclosure, the cell 110 has an explosion-proof valve 1102, and the support 20 is further provided with an avoidance hole 23 corresponding to the explosion-proof valve 1102. The avoidance hole 23, the first through hole 21 and the second through hole 22 are arranged in sequence in the height direction of the support 20.

Namely, as shown in FIG. 3, the support 20 is provided with the avoidance hole 23. The avoidance hole 23 penetrates through the thickness of the support 20, and the avoidance hole 23, the first through hole 21, and the second through hole 22 are arranged spaced apart in the height direction of the support 20. On the support 20, the avoidance hole 23, the first through hole 21 and the second through hole 22 are arranged in the order of avoidance hole 23, first through hole 21, and second through hole 22. The electrode terminal 1101 extends through the first through hole 21 and is electrically connected to the first connecting portion 41, and the thermally conductive member 30 extends through the second through hole 22 and abuts against or is bonded to the second connecting portion 42. Therefore, when mounted, they will not interfere with each other, and has the advantage of reasonable arrangement. This ensures that the first connecting portion 41 can be electrically connected to the electrode terminal 1101 and one side of the second connecting portion 42 can abut against or be bonded to the thermally conductive member 30, also facilitates the assembly of various structures in the battery assembly 100.

In some specific embodiments of the present disclosure, the connecting member 40 is an integrally formed sheet. The arrangement of the connecting member 40 as an integrally formed sheet facilitates the manufacturing and mounting of the connecting member 40, and facilitates the connecting member 40 to abut against or be bonded to the thermally conductive member 30, thus promoting the heat conduction.

According to an embodiment of the present disclosure, the thermally conductive member 30 is provided between each cell 110 and the corresponding connecting member 40.

That is to say, multiple thermally conductive members 30 are provided, and one thermally conductive member is provided between each cell 110 and the corresponding connecting member 40. That is, each cell 110 corresponds to one thermally conductive member 30. The battery assembly 100 generally includes multiple cells 110, and the cells 110 are electrically connected to each other through corresponding connecting members 40. In this way, heat can be transferred from the connecting member 40 through the corresponding thermally conductive member 30, thereby improving the transfer efficiency.

According to an embodiment of the present disclosure, the housing 10 is a metal housing. Namely, the housing 10 can be formed of a metal material, such as metal aluminum, copper and others. Compared with other nonmetallic materials, metals have high thermal conductivity, which is conducive to the heat dissipation of the connecting member 40.

The cell 110, the support 20, the connecting member 40 and the thermally conductive member 30 can be mounted through a process in which after the cell 110 is assembled, the support 20 is mounted on the cover plate 11 of the cell 110. Then, the side of the thermally conductive member 30 close to the cell 110 is coated with an adhesive, and the thermally conductive member 30 is mounted at a position corresponding to the second through hole 22. Finally, the mounting position of the connecting member 40 is located by the first through hole 21 and the thermally conductive member 30, the connecting member 40 is mounted on the support 20, and the connecting member 40 is electrically connected to the electrode terminal 1101 by welding. Moreover, the connecting member 40 is ensured to be in close contact with the thermally conductive member 30.

Therefore, in the battery assembly 100 according to the embodiment of the present disclosure, heat on the connecting member 40 can be transferred to the housing 10 of the cell 110 through the thermally conductive member 30, so as to achieve effective heat dissipation of connecting member 40, and prevent the heat accumulation on the connecting member 40. The battery assembly 100 according to the present disclosure has good heat dissipation effect, no heat accumulation, safety during use, and other advantages.

An embodiment of the present disclosure further provides a battery pack 200, which includes a liquid cooling plate 210 and the battery assembly 100 according to the above embodiments. The battery assembly 100 is attached to one side of the liquid cooling plate 210. It can be understood that the battery assembly 100 can be in direct contact with the liquid cooling plate 210, or there is a thermally conductive adhesive between the battery assembly 100 and the liquid cooling plate 210.

Through such an arrangement, the heat on the connecting member 40 can be transferred to the housing 10 of the cell 110 through the thermally conductive member 30, and then to the liquid cooling plate 210 from the housing 10 of cell 110, thus further improving the heat dissipation of the connecting member, and effectively ensuring the safety of the battery pack 200 during use.

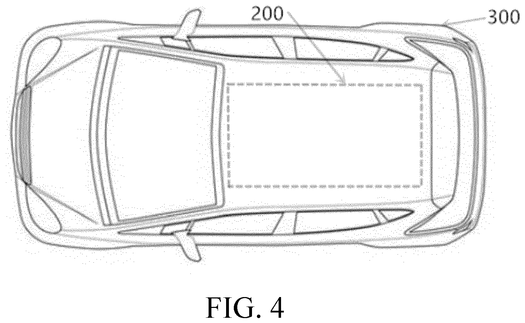

As shown in FIG. 4, an embodiment of the present disclosure further provides a vehicle 300. The vehicle 300 includes the battery pack 200.

Although some specific embodiments of the present disclosure have been described in detail by way of examples, a person skilled in the art should understand that the foregoing examples are merely for description, and not intended to limit the scope of the present disclosure. A person skilled in the art should appreciate that modifications can be made to the foregoing embodiments without departing from the scope and spirit of the present disclosure. The scope of the present disclosure is defined by the appended claims.

## Claims

1. A battery assembly, comprising:
a plurality of cells;
a connecting member, the cells being electrically connected to each other through the connecting member; and
a thermally conductive member, the cell having a housing, the thermally conductive member being provided between the connecting member and the housing, and the thermally conductive member is thermally conductively connected to the connecting member and the housing.

2. The battery assembly according to claim 1, wherein the thermally conductive member has a first and a second side opposite to each other, the first side of the thermally conductive member abuts against or is bonded to the housing, the connecting member is provided at the second side of the thermally conductive member, and the connecting member abuts against or is bonded to the second side of the thermally conductive member.

3. The battery assembly according to claim 1, wherein one of the connecting member and the housing abuts against the thermally conductive member, and the other is bonded to the thermally conductive member.

4. The battery assembly according to any one of claims 1 to 3, wherein the cell has an electrode terminal, the battery assembly further comprising
a support, provided at the same end of the plurality of cells, the connecting member being provided at a side of the support away from the cell; and wherein the support is provided with a first through hole corresponding to the electrode terminal, and the electrode terminal extends through the corresponding first through hole and is electrically connected to the connecting member; and
the support is further provided with a second through hole corresponding to the thermally conductive member, and the thermally conductive member extends through the corresponding second through hole and is thermally conductively connected to the housing and the connecting member respectively.

5. The battery assembly according to any one of claims 1 to 4, wherein the first through hole and the second through hole are arranged spaced apart on the support in a height direction of the support.

6. The battery assembly according to any one of claims 1 to 5, wherein the thermally conductive member and the electrode terminal are located at the same side of the cell; and the connecting member comprises
a first connecting portion, provided at a position corresponding to the electrode terminal, and electrically connected to the electrode terminal; and
a second connecting portion, provided below the first connecting portion and bonded to or abutting against the thermally conductive member.

7. The battery assembly according to any one of claims 1 to 6, wherein the cell has an explosion-proof valve, and the support is further provided with an avoidance hole corresponding to the explosion-proof valve, wherein the avoidance hole, the first through hole and the second through hole are arranged in sequence in the height direction of the support.

8. The battery assembly according to any one of claims 1 to 7, wherein the connecting member is an integrally formed sheet.

9. The battery assembly according to any one of claims 1 to 8, wherein the housing is a metal housing.

10. A battery pack, comprising:
a liquid cooling plate; and
a battery assembly, which is a battery assembly according to any one of claims 1 to 9, and attached to one side of the liquid cooling plate.

11. A vehicle, comprising a battery pack according to claim 10.
